# EUROPÄISCHE PATENTSCHRIFT

(11) **EP 1 002 256 B1**
(45) Veröffentlichungstag und Bekanntmachung des Hinweises auf die Patenterteilung: **24.07.2002**
(21) Anmeldenummer: 98925447.9
(22) Anmeldetag: 05.05.1998
(51) Int. Cl.: G02F 1/01, H04B 10/22

(54) **VORRICHTUNG ZUR OPTISCHEN SIGNALÜBERTRAGUNG ZWISCHEN ZWEI DYNAMISCH ENTKOPPELTEN SYSTEMEN**
DEVICE FOR TRANSMITTING OPTICAL SIGNALS BETWEEN TWO DYNAMICALLY DECOUPLED SYSTEMS
DISPOSITIF POUR LA TRANSMISSION DE SIGNAUX OPTIQUES ENTRE DEUX SYSTEMES DECOUPLES DE FA ON DYNAMIQUE

(30) Priorität: 17.07.1997 DE 19730925
(43) Veröffentlichungstag der Anmeldung: 24.05.2000
(73) Patentinhaber: Schleifring und Apparatebau GmbH, 82256 Fürstenfeldbruck (DE)
(72) Erfinder: POISEL, Hans, D-91227 Leinburg (DE)
(74) Vertreter: Münich, Wilhelm, Dr.
(86) Internationale Anmeldenummer: DE9801258
(87) Internationale Veröffentlichungsnummer: WO9904309

(56) Entgegenhaltungen:
- US-A- 4 749 248
- US-A- 4 962 986
- US-A- 5 412 743
- KWAK C H ET AL: "FORMATION DYNAMICS OF BRAGG PHASE GRATINGS IN PHOTOSENSITIVE OPTICAL FIBERS" IEEE PHOTONICS TECHNOLOGY LETTERS, Bd. 6, Nr. 7, 1. Juli 1994, Seiten 836-838, XP000465538

## Beschreibung

### Technisches Gebiet

Die Erfindung bezieht sich auf eine Vorrichtung zur optischen Signalübertragung zwischen zwei dynamisch entkoppelten Systemen, mit wenigstens einer, eine erste Lichtquelle aufweisenden Sendeeinrichtung, die auf dem ersten System angebracht ist, sowie eine, wenigstens einen Lichtwellenleiter aufweisende Empfangseinrichtung, die auf dem zweiten System angebracht ist und in die das Licht der Lichtquelle einkoppelbar ist.

### Stand der Technik

Zur optischen Signalübertragung zwischen zwei räumlich getrennten Bauteilen, die sich zudem in aller Regel relativ zueinander bewegen, wird Licht eines auf einem Bauteil befestigten Lichtsenders in einen Wellenleiter der am gegenüberliegenden Bauteil angeordnet ist, eingekoppelt und innerhalb des Wellenleiters zu einer entsprechenden Lichtdetektoreinheit weitergeleitet. Ein wesentliches Kriterium für die Güte der Signalübertragung stellt die Lichteinkopplung in den Wellenleiter dar, da der Lichteinkoppelprozeß in den Wellenleiter mit anschließender Lichtweiterleitung innerhalb des Wellenleiters bis hin zur Signalumwandlung in einer Detektoranordnung mit hohen Verlusten verbunden ist.

Üblicherweise wird der als Lichtleitfaser ausgebildete Wellenleiter senkrecht zur Lichtleitfaseroberfläche bestrahlt, so daß der in den Wellenleiter eingekoppelte Lichtanteil ebenfalls senkrecht zur Lichtleitfaserlängsachse orientiert ist. Da für gewöhnlich Detektoranordnungen an den Faserenden angeordnet sind, tragen nur jene Teile des in die Lichtleitfaser eingekoppelten Lichtes zur Signalübertragung bei, die sich in Richtung der Lichtleitfaserlängsachse ausbreiten können und im Wege der Totalreflexion verhältnismäßig verlustfrei zur Detektoranordnung gelangen. Dieser Anteil ist bei der geschilderten seitlichen Bestrahlung im Allgemeinen vernachlässigbar. Es müssen daher Maßnahmen getroffen werden, einen möglichst großen Anteil des in die Lichtleitfaser eingekoppelten Lichtes in Richtung zur Faserlängsachse umzulenken, derart, als würde das Licht an einer Stimseite der Lichtleitfaser eingekoppelt werden.

Beispielsweise geht aus der DE 28 46 526 C2 ein Röntgensichtgerät hervor, das einen ringförmigen Lichtwellenleiter vorsieht, entlang dessen Außenkontur eine Lichtquelle als Signalquelle bewegt wird. Zur Umlenkung der senkrecht in den Lichtwellenleiter eingekoppelten Strahlung in Längsrichtung des Lichtwellenleiters, sind auf der Innenseite des Lichtwellenleiters Stufen vorgesehen, die sich über den gesamten Umfang des Lichtwellenleiters erstrecken und eine Lichtreflexion bewirken, so daß das in den Lichtwellenleiter eingekoppelte Licht der Lichtquelle über den gesamten Umfang des Lichtwellenleiters gleichmäßig verteilt wird. An wenigstens einem Ende des Lichtwellenleiters ist zur Detektion des Lichtes eine entsprechende Empfangseinheit vorgesehen. Zwar vermag zum einen die stufenförmige Ausbildung der Innenseite des Lichtwellenleiters das senkrecht in den Lichtwellenleiter eingekoppelte Licht in Faserlängsrichtung umlenken, doch beeinträchtigt diese Struktur das Ausbreitungsverhalten des Lichtes längs zur Wellenleiterachse erheblich, wodurch das innerhalb des Wellenleiters geführte Licht durch Brechungen und Reflexion an den Stufenkonturen aus dem Wellenleiter teilweise ausgekoppelt wird und dadurch starken Verlusten unterworfen ist.

Ferner sind Lösungen bekannt, die die Lichtführung innerhalb eines Lichtwellenleiters weitgehend unbeeinflußt lassen, beispielsweise enthält hierzu der als Lichtleitfaser ausgebildete Wellenleiter fluoreszierende Stoffe, die nach energetischer Anregung durch Bestrahlung Fluoreszenzlicht abgeben. Jene Lichtanteile des Fluoreszenzlichtes, das sich in Faserlängsrichtung ausbreitet kann, tragen zur Signalübertragung innerhalb der Lichtleitfaser bei. Ein derartiges Beispiel geht aus der DE 44 21 616 A1 hervor, in der eine Vorrichtung zum Senden und Empfangen von kreisenden Lichtsignalen beschrieben ist. Zwar breitet sich das in Faserlängsrichtung durch Totalreflexion geführte Licht weitgehend verlustfrei in der Lichtleitfaser aus, da diese eine geometrisch ungestörte Kontur aufweist, doch wird die Lichtsignalübertragung durch den zeitlich verzögerten Fluoreszenzeffekt hinsichtlich hoher Übertragungsraten eingeschränkt, was nachteilhaft für eine optimierte Nutzung von Datenübertragungskanälen ist.

Um die vorstehenden Nachteile des Fluoreszenzlichts zu vermeiden und dennoch die wellenleitende Eigenschaft einer Lichtleitfaser nicht zu beeinträchtigen wird bekannterweise zur Lichteinkopplung ein an der Oberfläche der Lichtleitfaser angeordnetes Einkoppelprisma eingesetzt, durch das senkrecht auf die Lichtleiteroberfläche auftreffendes Licht durch das Einkoppelprisma mittels Brechung abgelenkt wird, so daß das in die Lichtleitfaser eingekoppelte Licht schräg zur Lichtleitfaserlängsachse verläuft und innerhalb der Lichtleitfaser mittels Totalreflexion geführt wird. Bewegt sich jedoch der Lichtsender relativ zur Lichtleitfaser, so muß das Einkoppelprisma simultan zum Lichtsender über die Lichtleitfaser mitgeführt werden, wobei darauf zu achten ist, daß der Abstand - hierbei handelt es sich um Größenordnungen, die im µm-Bereich liegen - zwischen Einkoppelprisma und Lichtleitfaser höchst genau einzuhalten ist und daher eine Präzisionsmechanik voraussetzt, die konstruktiv und insbesondere finanziell für einen operativen Einsatz unattraktiv ist.

Der Erfindung liegt die Aufgabe zugrunde, eine Vorrichtung zur optischen Signalübertragung zwischen zwei dynamisch entkoppelten Systemen, vorzugsweise zwei sich relativ zueinander bewegenden Systemen, mit wenigstens einer, eine erste Lichtquelle aufweisenden Sendeeinrichtung, die auf dem ersten System angebracht ist, sowie eine, wenigstens eine Lichtleitfaser aufweisende Empfangseinrichtung, die auf dem zweiten System angebracht ist, und entlang deren Erstreckung die Lichtquelle bewegt wird und in die das Licht der Lichtquelle einkoppelbar ist, derart weiterzubilden, daß die Lichteinkopplung des von der Sendeeinrichtung herrührenden Lichtes in die Lichtleitfaser möglichst ohne große Verluste erfolgt. Es soll insbesondere ein möglichst großer Lichtanteil innerhalb der Lichtleitfaser in Längsrichtung geführt werden, wobei die lichtleitenden Eigenschaften der Faser für eine ungestörte Ausbreitung des Lichtes innerhalb der Lichtleitfaser mittels Totalreflexion unbeeinflußt bleiben sollen. Die hierfür durchzuführenden Maßnahmen sollen überdies günstig in der Herstellung und unproblematisch im Einsatz sein, so daß die Vorrichtung an beliebigen Einsatzorten operationell einsetzbar ist.

Die Lösung der der Erfindung zugrunde liegenden Aufgabe ist in den Ansprüchen 1, 4 und 6 angegeben. Den Erfindungsgedanken vorteilhaft weiterbildende Merkmale sind Gegenstand der Unteransprüche.

Eine Vorrichtung gemäß dem Oberbegriff des Anspruchs 1 ist erfindungsgemäß dadurch ausgebildet, daß wenigstens auf der, der ersten Lichtquelle unmittelbar gegenüberliegenden Oberfläche der Lichtleitfaser eine photorefraktive Schicht aufgebracht ist, und daß am ersten System wenigstens eine kohärente Lichtquelle vorgesehen ist, deren Licht durch Strahlüberlagerung am Ort der Lichteinkopplung ein optisches Gitter in die photorefraktive Schicht dynamisch einprägt, das über Beugungseigenschaften für das Licht der ersten Lichtquelle verfügt, so daß das Licht in die Lichtleitfaser einkoppelbar ist.

Die erfindungsgemäße Idee macht sich die Eigenschaft photorefraktiver Materialien zunutze, die über nichtlineare optische Fähigkeiten in der Weise verfügen, daß ihr Brechungsindex durch Lichtbestrahlung veränderbar ist. Insbesondere ist es möglich durch gezielte Überlagerung zweier kohärenter Lichtstrahlen ein Interferenzmuster zu erzeugen und auf eine photorefraktive Materialschicht abzubilden, so daß sich beispielsweise eine sinusförmige Lichtintensitätsverteilung an der Oberfläche der photorefraktiven Materialschicht ergibt. Entsprechend der Lichtintensitätsverteilung bewegen sich die in der photorefraktiven Materialschicht enthaltenen Ladungen und erzeugen ein elektrisches Feld, dessen Stärke sich ebenfalls sinusförmig ändert. Dieses Feld verzerrt wiederum die Materialschicht in gleicher periodischer Weise und ruft Änderungen im Brechungsindex hervor. Auf diese Weise bildet sich ein sogenanntes Brechungsindex-Gitter oder Brechungsindex-Volumenhologramm aus. Tiefergehende Ausführungen hierzu sind in dem Beitrag von D. M. Pepper "Der photorefraktive Effekt", Spektrum der Wissenschaft, Dezember 1990, S. 72 - 79 zu entnehmen.

Der der Erfindung zugrundeliegende Hauptgedanke betrifft die Erzeugung einer lokal auf der Oberfläche der Lichtleitfaser liegenden Einkoppelstelle für das aus der Sendeeinrichtung auf die Lichtleitfaser gerichtete Licht. Die Einkoppelstelle auf der Lichtleitfaser ist räumlich begrenzt, so daß der übrige Teil der Lichtleitfaser die Lichtführung innerhalb der Lichtleitfaser unbeeinflußt läßt.

Die Erzeugung dieser Einkoppelstelle erfolgt derart, daß zum einen die Lichtleitfaser vorzugsweise vollständig mit einer photorefraktiven Materialschicht ummantelt ist, deren Brechungsindex im unbelichteten Zustand identisch oder ähnlich dem Brechungsindex der Lichtleitfaser ist. Ferner ist an dem die Sendeeinrichtung tragenden System eine kohärente Lichtquelle angeordnet, die für die Erzeugung eines Interferenzmusters auf der Oberfläche der photorefraktiven Materialschicht am Ort der Einkoppelstelle vorgesehen ist.

Zur Erzeugung einer Zweistrahlinterferenz mit Hilfe nur einer einzigen kohärenten Lichtquelle kann der Strahl der Lichtquelle mit Hilfe eines Strahlteilers aufgespaltet und über eine entsprechende Spiegelanordnung zur Überlagerung gebracht werden. Alternativ dazu können auch zwei oder mehrere getrennte kohärente Lichtquellen am System der Sendeeinrichtung vorgesehen sein, deren Einzellichtstrahlen in einer geeigneten Weise zur Überlagerung gebracht werden.

Auch sieht eine Alternative, erfindungsgemäße Ausführungsform vor, mit Hilfe einer nicht notwendigerweise kohärenten Lichtquelle, die fest an dem System der Sendeeinrichtung angekoppelt ist, durch Bestrahlung einer Maske ein Lichtmuster auf der photorefraktiven Schicht der Lichtleiteranordnung zu erzeugen, durch das der Brechungsindex innerhalb der photorefraktiven Materialschicht periodisch in Art eines für das Licht der Lichtquelle der Sendeeinrichtung wirksamen optischen Gitters verändert wird.

Das sich zeitlich dynamisch an der Einkoppelstelle bildende optische Phasengitter ermöglicht dem in die Lichtleitfaser einzukoppelnden Licht aufgrund von Beugung Ausbreitungsrichtungen innerhalb der Lichtleitfaser einzunehmen, die zu in der Lichtleitfaser geführten Moden führt. Da sich das Einkoppelgitter nur am Ort der aktuellen Einkoppelstelle durch gezielte Bestrahlung bildet, können die bereits in die Lichtleitfaser eingekoppelten Strahlen in der gesamten übrigen Lichtleitfaser durch Totalreflexion ungestört weiter geführt werden.

Da die photorefraktive Materialschicht lediglich bei gezielter Lichtbestrahlung ihren Brechungsindex ändert und im unbelichteten Fall ihren ursprünglichen Brechungsindex einnimmt, wandert das optische Phasengitter dynamisch längs der Erstreckung der Lichtleitfaser simultan mit der Sendeeinrichtung mit. Insofern eignet sich der an sich bekannte Effekt der Zweistrahlinterferenz an photorefraktiven Materialien besonders für die optische Signalübertragung zwischen zwei sich relativ zueinander bewegenden Systemen, wie es beispielsweise bei faseroptischen Schleifringen der Fall ist.

Eine weitere erfindungsgemäße Ausführungsform zur Lichteinkopplung in eine Lichtleitfaser unter Ausnutzung des photorefraktiven Effektes sieht eine Lichtleitfaser vor, an deren Oberfläche eine physikalisch ausgebildete Gitterstruktur eingearbeitet ist, vorzugsweise in Art mechanisch in die Kontur der Lichtleitfaser eingebrachter Vertiefungen und Erhöhungen, die für sich genommen ein Beugungsgitter für das in die Lichtleitfaser einzukoppelnde Licht darstellt. Unmittelbar auf der strukturierten Oberfläche der Lichtleitfaser wird eine photorefraktive Materialschicht bündig zu der eingearbeiteten Struktur sowie mit einer der Struktur gegenüberliegenden glatten Materialschichtoberfläche aufgebracht.

Im unbelichteten Fall ist die photorefraktive Materialschicht lediglich als eine optisch transparente, die Lichtleitfaser umhüllende Schicht anzusehen, durch deren unmittelbares Angrenzen an die strukturierte Oberfläche der Lichtleitfaser diese keine optische Wirkung zeigt, zumal der Brechungsindex der photorefraktiven Materialschicht mit dem Brechungsindex der Lichtleitfaser identisch ist. Eine in diesem Zustand innerhalb der Lichtleitfaser geführte Lichtwelle tritt ungehindert durch die Kontaktschicht zwischen Lichtleitfaser und photorefraktiver Materialschicht hindurch, wird an der Oberfläche der photorefraktiven Materialschicht bspw. totalreflektiert und auf diese Weise innerhalb der Lichtleitfaser geführt.

An dem die Sendeeinheit tragenden System ist eine nicht notwendigerweise kohärente Lichtquelle angebracht, die den Einkoppelort lediglich über einen begrenzten Bereich weitgehend homogen bestrahlt, wodurch sich der Brechungsindex der photorefraktiven Schicht ändert und die in die Lichtleitfaser eingearbeitete Gitterstruktur optische Wirkung entfaltet. Das von der Sendeeinrichtung abgestrahlte Licht gelangt durch die belichtete photorefraktive Materialschicht und wird an dem optisch wirksamen Phasengitter derart in die Lichtleitfaser gebeugt, daß die eingekoppelten Strahlen im Wege der Totalreflexion innerhalb der Lichtleitfaser geführt wird.

Da das im vorstehend genannten Ausführungsbeispiel verwendete Phasengitter physikalisch fest an der Oberfläche der Lichtleitfaser vorgesehen ist und die photorefraktive Schicht lediglich durch gleichmäßige Beleuchtung ihren Brechungsindex zur vorübergehenden optischen Wirksamkeit des Phasengitters für das einzukoppelnde Licht, ändert, können auch alternative Materialien verwendet werden, die durch-externen Energieeintrag ihren Brechungsindex ändern. Beispielsweise eignen sich hierzu elektrisch sensitive Materialien, die durch Anlegen einer äußeren Spannung ihren Brechungsindex ändern. Hierzu sind beispielsweise Elektroden um den beschichteten Lichtwellenleiter anzuordnen, daß in Abhängigkeit der aktuellen Einkoppelstelle, d.h. in Abhängigkeit der aktuellen Position der Sendeeinrichtung gegenüber der Lichtleitfaser, ihr Brechungsindex geändert wird, so daß das von der ersten Lichtquelle herrührende Licht die optisch transparente Schicht weitgehend verlustfrei durchdringt und durch die Gitterstruktur in den Lichtwellenleiter mittels Beugung eingekoppelt wird.

Auch können Flüssigkristallschichten oder Schichten aus elektrorheologischen Flüssigkeiten unmittelbar auf dem Kern der Glasfaser aufgebracht werden, die durch entsprechenden äußeren Energieeintrag direkt ein Beugungsgitter, durch entsprechende lokale Variation des Brechungsindex, bilden, oder die bei gleichmäßiger Brechungsindexänderung die vorstehend verborgenen Gitterstrukturen an der Lichtleitfaseroberfläche hervortreten lassen.

### Kurze Beschreibung der Zeichnungen:

Die Erfindung wird nachstehend ohne Beschränkung des allgemeinen Erfindungsgedankens anhand von Ausführungsbeispielen unter Bezugnahme auf die Zeichnungen exemplarisch. Es zeigen:
- Fig. 1: Ankoppelanordnung mit einer kohärenten Lichtquelle zur Erzeugung eines Interferenzmusters auf der Oberfläche einer photorefraktiven Schicht,
- Fig. 2: Anordnung mit einer Maske zur Erzeugung eines Phasengitters innerhalb der photorefraktiven Schicht,
- Fig. 3: Beleuchtungsprinzip mit einem fest an der Lichtleitfaseroberfläche eingebrachten Phasengitters sowie
- Fig. 4: Anordnung mit elektrisch sensiblem Material über einer, ein Phasengitter aufweisende Lichtleitfaser.

### Beschreibung von Ausführungsbeipsielen

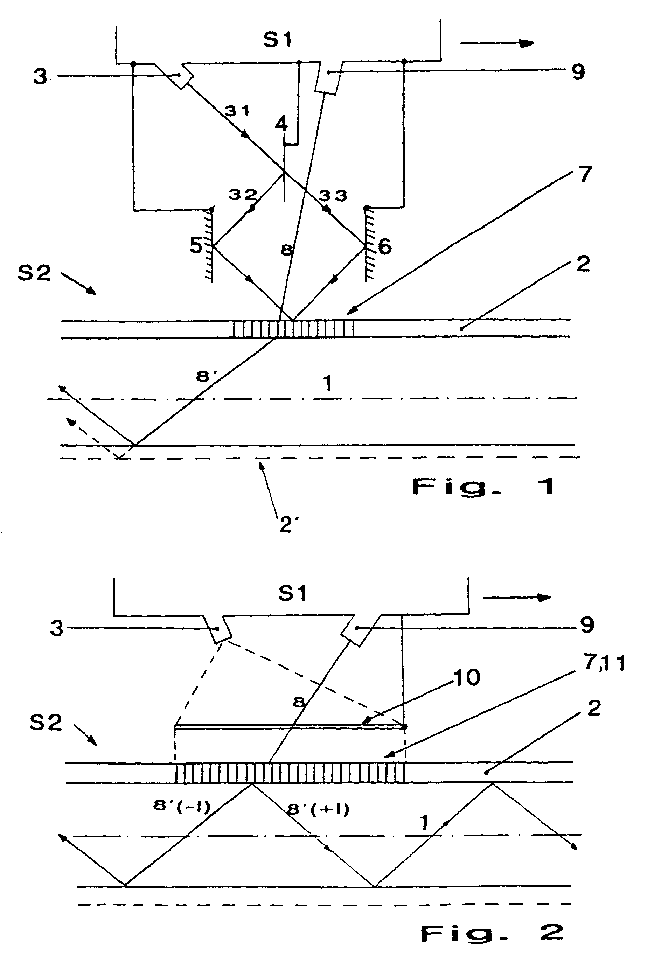

In Fig. 1 ist in schematisierter Weise eine Vorrichtung zur optischen Signalübertragung dargestellt, das ein bewegliches System S1 gegenüber einem dazu ruhenden System S2 zeigt. Das ruhende System S2 besteht aus einer Lichtleitfaser 1, die wenigstens an ihrer dem beweglichen System S1 unmittelbar gegenüberliegenden Oberfläche eine photorefraktive Schicht 2 vorsieht. Die untere gestrichelte Linie 2' unterhalb der Lichtleitfaser 1 soll lediglich andeuten, daß die photorefraktive Schicht 2 die Lichtleitfaser 1 vollständig umschließen kann.

Das bewegliche System S1, das vorzugsweise mit einem konstanten Abstand über das ruhende System S2 bewegt wird (s. Pfeilrichtung), weist eine kohärente Lichtquelle 3 auf, deren Lichtstrahl 31 auf eine Strahlteilereinheit 4 gerichtete ist, die Lichtstrahlen 32 und 33 mit gleicher Intensität erzeugt. Ferner sind fest verbunden mit dem beweglichen System S1 Spiegel 5, 6 vorgesehen, an denen die Lichtstrahlen 32 und 33 reflektiert werden, so daß sie im Bereich der photorefraktiven Schicht 2 zur Überlagerung gelangen. Das sich auf der Oberfläche der photorefraktiven Schicht 2 einstellende Interferenzmuster 7 führt zu einem periodisch veränderlichen Brechungsindex innerhalb der photorefraktiven Schicht 2 durch den sich für den Moment der Belichtung eine Gitterstruktur ausbildet, an der der Lichtstrahl 8, der aus der Lichtquelle 9 der Sendeeinrichtung abgestrahlt wird, in die Lichtleitfaser 1 gebeugt wird, daß der eingekoppelte Lichtstrahl 8' im Wege der Totalreflexion 10 innerhalb der Lichtleitfaser geführt werden kann (die gestrichelte Linienführung des eingekoppelten Lichtstrahls 8' sieht eine Totalreflexion an der Grenzschicht zwischen Luft und photorefraktiver Schicht 9 vor, da im unbelichteten Zustand der Brechungsindex nₛ der photorefraktiven Schicht identisch ist mit dem Brechungsindex nₖ der Lichtleitfaser.

Ein wesentlicher Gesichtspunkt der erfindungsgemäßen Vorrichtung liegt darin, daß sich der Bereich des Interferenzmusters 7, an dem sich in der photorefraktiven Schicht 2 ein Beugungsgitter ausbildet, simultan mit dem beweglichen System S1 mitbewegt, d.h. die photorefraktive Schicht kehrt unmittelbar nach einer Beleuchtung wieder in ihren Grundzustand zurück und gleicht sich bei entsprechender Materialwahl dem Brechungsindex der Lichtleitfaser wieder an.

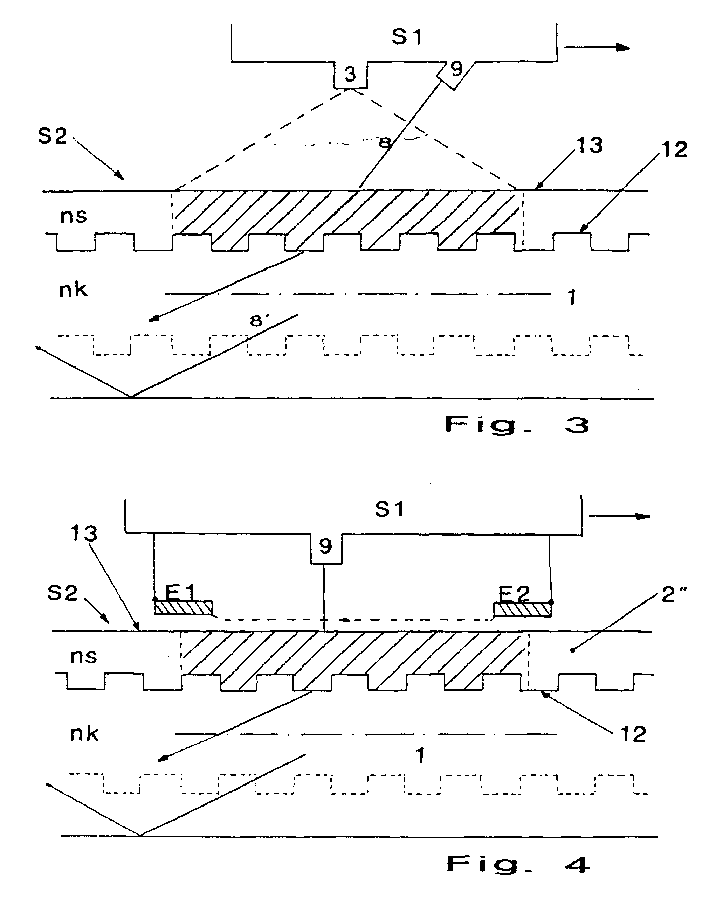

In Fig. 2 weist das bewegliche System S1 neben der für die Signalübertragung vorgesehenen Lichtquelle 9 eine Beleuchtungslichtquelle 3 zur Beleuchtung einer Maske 10 auf, in der beispielsweise ein Sinusgitter eingearbeitet ist. Das Abbild der Maske auf der photorefraktiven Schicht 2 erzeugt wiederum ein Sinusgitter 11 an dem der Lichtstrahl 8 in der positiven und negativen ersten Ordnung (s. die eingekoppelten Strahlen 8' (-I), 8" (+I)) gebeugt wird.

Das bewegliche System S1, an dem die Maske 10 fest angebracht ist, bewegt sich parallel zur Lichtfaser 1 in Pfeilrichtung, und erzeugt jeweils im Strahlenfeld der Lichtquelle 3, deren Licht die Maske 10 durchdringt, ein dynamisches Beugungsgitter, das lediglich auf den eng begrenzten Bereich der Einkoppelstelle beschränkt ist.

Fig. 3 zeigt eine Lichtleitfaseranordnung, bei der die Lichtleitfaseroberfläche mit einer physikalisch eingearbeiteten Struktur 12 versehen ist, die in Art eines Beugungsgitters ausgebildet ist. Die Lichtleitfaser 1 ist mit einer photorefraktiven Schicht 2 umgeben, die eine glatte Außenseite 13 aufweist. Im unbelichteten Zustand weist die photorefraktive Schicht 2 den gleichen Brechungsindex auf wie die Lichtleitfaser 1, wodurch die Grenzschicht zwischen Lichtleitfaser 1 und photorefraktiver Schicht 2 optisch unwirksam ist. In die Lichtleitfaser eingekoppelte Lichtstrahlen 8 treten ungehindert durch die Grenzschicht hindurch und werden an der Oberfläche der photorefraktiven Schicht 2 total reflektiert.

Wird jedoch die photorefraktive Schicht 2 mit Hilfe einer Lichtquelle 3 beleuchtet, wodurch sie deren Brechungsindex ändert, so kommt die Gitterstruktur 12 an der Oberfläche der Lichtleitfaser 1 optisch zum Tragen, an der eingekoppeltes Licht 8 gebeugt und in das Innere der Lichtleitfaser umgelenkt wird.

Fig. 4 zeigt alternativ eine Anordnung, in der anstelle der photorefraktiven Schicht 2 eine elektrosensitive Materialschicht 2" eingesetzt wird, deren Brechungsindex sich in Abhängigkeit eines äußeren elektrischen Feldes ändert. An dem beweglichen System S1 sind Elektrodenkörper E1, E2 angebracht, zwischen denen gezielt elektrische Feldlinien verlaufen, wodurch der Brechungsindex der elektrisch sensitiven Schicht 2" in der vorstehend beschriebenen Weise geändert wird. Wie in Fig. 4 dargestellt, gelangt der zwischen den Elektroden E1 und E2 auf die elektrisch sensitive Schicht auftreffende Lichtstrahl 8 auf die Oberflächenstruktur 12 an der der Lichtstrahl in das Innere der Lichtleitfaser 1 abgelenkt wird.

### BEZUGSZEICHENLISTE

- S1: bewegliches System
- S2: ruhendes System
- 1: Lichtleitfaser
- 2: photorefraktive Schicht
- 2': Oberfläche der photorefraktivem Schicht
- 2": elektrisch sensitive Schicht
- 3: Lichtquelle
- 31, 32, 33: Lichtstrahlen
- 4: Strahlteilereinheit
- 5, 6: Spiegel
- 7: Interferenzmuster, Beugungsgitter
- 8: Lichtstrahl
- 8': eingekoppelter Lichtstrahl
- 8' (-I): gebeugter Lichtstrahl der -1. Ordnung
- 8' (+I): gebeugter Lichtstrahl der +1. Ordnung
- 9: Lichtquelle an der Sendeeinrichtung
- 10: Maske
- 11: Sinusgitter
- 12: Oberflächenstruktur
- 13: Außenseite der photorefraktiven Schicht
- E1, E2: Elektrodenkörper
- nₛ: Brechungsindex der photorefraktiven Schicht
- nₖ: Brechungsindex der Lichtleitfaser

## Patentansprüche

1. Vorrichtung zur optischen Signalübertragung, die aus einem ersten und zweiten System (S1, S2) besteht, die dynamisch entkoppelt sind und sich vorzugsweise relativ zueinander bewegen, mit wenigstens einer, eine erste Lichtquelle (9) aufweisenden Sendeeinrichtung, die auf dem ersten System (S1) angebracht ist, sowie einer, wenigstens eine Lichtleitfaser (1) aufweisenden Empfangseinrichtung, die auf dem zweiten System (S2) angebracht ist und entlang deren Erstreckung die erste Lichtquelle (9) bewegt wird und in die das Licht der ersten Lichtquelle (9) einkoppelbar ist,
**dadurch gekennzeichnet, daß** wenigstens auf der, der ersten Lichtquelle (9) unmittelbar gegenüberliegenden Oberfläche der Lichtleitfaser (1) eine photorefraktive Schicht (2) aufgebracht ist, und
daß am ersten System (S1) wenigstens eine kohärente Lichtquelle (3) angebracht ist, deren Licht durch Strahlüberlagerung am Ort der Lichteinkopplung ein optisches Gitter (7) in die photorefraktive Schicht (2) dynamisch einprägt, das über Beugungseigenschaften für das Licht der ersten Lichtquelle (9) verfügt, so daß deren Licht in die Lichtleitfaser (1) einkoppelbar ist.

2. Vorrichtung nach Anspruch 1,
**dadurch gekennzeichnet, daß** das Licht (31) der kohärenten Lichtquelle (9) auf einen Strahlteiler (4) trifft, durch den zwei getrennte Lichtstrahlen (32, 33) entstehen, die mittels einer Spiegelanordnung (5, 6) zur Überlagerung gebracht werden.

3. Vorrichtung nach Anspruch 1,
**dadurch gekennzeichnet, daß** wenigstens zwei kohärente Lichtquellen am ersten System (S1) vorgesehen sind, deren Lichtstrahlen unmittelbar zur Überlagerung gebracht werden.

4. Vorrichtung nach dem Oberbegriff des Anspruchs 1,
**dadurch gekennzeichnet, daß** wenigstens auf der, der ersten Lichtquelle (9) unmittelbar gegenüberliegenden Oberfläche der Lichtleitfaser (1) eine photorefraktive Schicht (2) aufgebracht ist, und
daß eine weitere Lichtquelle (3) sowie eine optische Maske (10) am ersten System (S1) derart vorgesehen sind, daß mittels Durchstrahlung der Maske (10) am Ort der Lichteinkoppelstelle ein optisches Gitter (7) in die photorefraktive Schicht (2) dynamisch eingeprägt wird, das über Beugungseigenschaften für das Licht der ersten Lichtquelle (9) verfügt, so daß deren Licht in die Lichtleitfaser (1) einkoppelbar ist.

5. Vorrichtung nach einem der Ansprüche 1 bis 4,
**dadurch gekennzeichnet, daß** sich das optische Gitter (7) durch Bestrahlung der photorefraktiven Schicht (2) lediglich an der aktuellen Einkoppelstelle zwischen der ersten Lichtquelle (9) und der mit der photorefraktiven Schicht (2) überzogenen Lichtleitfaser (1) ausbildet.

6. Vorrichtung nach dem Oberbegriff des Anspruchs 1,
**dadurch gekennzeichnet, daß** wenigstens in die, der ersten Lichtquelle (9) unmittelbar gegenüberliegende Oberseite der Lichtleitfaser (1) eine physikalisch ausgebildete Gitterstruktur (12) eingearbeitet ist,
daß auf der Gitterstruktur (12) eine optisch transparente Schicht (2) aufgebracht ist, die einen Brechungsindex aufweist, der dem Brechungsindex der Lichtleitfaser entspricht und deren Brechungsindex durch äußeren Energieeintrag veränderbar ist.

7. Vorrichtung nach Anspruch 6,
**dadurch gekennzeichnet, daß** die Gitterstruktur (12) über Beugungseigenschaften für das Licht der ersten Lichtquelle (9) verfügt, so daß das Licht in die Lichtleitfaser (1) einkoppelbar ist.

8. Vorrichtung nach Anspruch 6 oder 7,
**dadurch gekennzeichnet, daß** die optisch transparente Schicht (2) aus photorefraktivem Material besteht, das bei Bestrahlung mit Licht seinen Brechungsindex derart ändert, daß das von der ersten Lichtquelle (9) herrührende Licht die optisch transparente Schicht weitgehend verlustfrei durchdringt und durch die Gitterstruktur (12) in die Lichtleitfaser (1) mittels Beugung einkoppelbar ist.

9. Vorrichtung nach Anspruch 6 oder 7,
**dadurch gekennzeichnet, daß** die optisch transparente Schicht (2) aus elektrisch sensitivem Material besteht, das durch Anlegen einer äußeren Spannung seinen Brechungsindex ändert.

10. Vorrichtung nach Anspruch 9,
**dadurch gekennzeichnet, daß** Elektroden (E1, E2) um die Lichtleitfaser (1) derart angeordnet sind, daß in Abhängigkeit der aktuellen Einkoppelstelle der Brechungsindex derart änderbar ist, daß das von der ersten Lichtquelle (9) herrührende Licht die elektrisch sensitive Materialschicht (2") weitgehend verlustfrei durchdringt und durch die Gitterstruktur (12) in die Lichtleitfaser (1) mittels Beugung einkoppelbar ist.

11. Vorrichtung nach einem der Ansprüche 6 bis 10,
**dadurch gekennzeichnet, daß** die optisch transparente Schicht (12) an der der ersten Lichtquelle (9) gegenüberliegenden Oberseite glatt ausgebildet ist.

12. Vorrichtung nach einem der Ansprüche 1 bis 11,
**dadurch gekennzeichnet, daß** das erste (S1) und zweite System (S2) relativ zueinander rotierbar gelagert sind und die Anordnung als optischer Schleifring zur Signalübertragung zwischen den beiden Systemen dient.

## Claims

1. Device for transmitting optical signals, which is composed of a first system and a second system (S1, S2) that are dynamically decoupled systems are preferably mobile relative to each other, comprising at least one transmitter means including a first light source (9), which is mounted on said first system (S1), as well as a receiver means including at least one fibre-optical wave guide (1), which is mounted on said second system (S2) and along whose extension said first light source (9) is moved and into which the light from said first light source (9) can be coupled in,
**characterised in that** a photo-refractive layer (2) is applied at least on that surface of said fibre-optical wave guide (1), which is directly opposite to said first light source (9), and
that at least one source (3) of coherent light is mounted on said first system (S1), whose light imprints dynamically an optical grating (7) into said photo-refractive layer (2) by superimposing beams at the light-coupling site, which grating has diffraction characteristics for the light from said first light source (9) so that the light of the latter can be coupled into said fibre-optical wave guide (1).

2. Device according to Claim 1,
**characterised in that** the light (31) of said source (9) of coherent light is incident on a beam splitter (4) by means of which two separate light beams (32, 33) are created which are caused to superimpose each other by means of a mirror array (5, 6).

3. Device according to Claim 1,
**characterised in that** at least two sources of coherent light are provided on said first system (S1) whose light beams are caused to superimpose each other directly.

4. Device according to the introductory clause of Claim 1,
**characterised in that** a photo-refractive layer (2) is applied at least on that surface of said fibre-optical wave guide (1), which is directly opposite to said first light source (9), and
that a further light source (3) as well as an optical mask (10) are provided on said first system (S1) in such a way that an optical grating (7) is dynamically imprinted into said photo-refractive layer (2) by means of penetration of said mask (10) at the point of said light-coupling site, which grating displays diffraction characteristics for the light from said first light source (9) so that the light of the latter can be coupled into said fibre-optical wave guide (1).

5. Device according to any of the Claims 1 to 4,
**characterised in that** said optical grating (7) is formed by irradiation of said photo-refractive layer (2) merely at the actual coupling site between said first light source (9) and said fibre-optical wave guide (1) coated with said photo-refractive layer (2).

6. Device according to the introductory clause of Claim 1,
**characterised in that** a physically implemented grating structure (12) is formed at least **in that** surface of said fibre-optical wave guide (1), which is directly opposite to said first light source (9),
and that an optically transparent layer (2) is applied on said grating structure (12), which presents a refractive index corresponding to the refractive index of said fibre-optical wave guide, and whose refractive index is variable by the introduction of energy from the outside.

7. Device according to Claim 6,
**characterised in that** said grating structure (12) is provided with diffraction properties for the light from said first light source (9) so that the light can be coupled into said fibre-optical wave guide (1).

8. Device according to Claim 6 or 7,
**characterised in that** said optically transparent layer (2) consists of a photo-refractive material which when irradiated with light varies its refractive index in such a way that the light originating from said first light source (9) penetrates said optically transparent layer largely without losses and can be coupled by means of diffraction through said grating structure (12) into said fibre-optical wave guide (1).

9. Device according to Claim 6 or 7,
**characterised in that** said optically transparent layer (2) consists of an electrically sensitive material that varies its refractive index

10. Device according to Claim 9,
**characterised in that** electrodes (E1, E2) are disposed about said fibre-optical wave guide (1) in such a form that the refractive index is variable as a function of the actual coupling site so that the light originating from said first light source (9) penetrates said layer (2") of electrically sensitive material largely without losses and can be coupled by means of diffraction through said grating structure (12) into said fibre-optical wave guide (1).

11. Device according to any of the Claims 6 to 10,
**characterised in that** said optically transparent layer (12) is formed with a smooth configuration on the upper side opposite to said first light source (9).

12. Device according to any of the Claims 1 to 11,
**characterised in that** said first system (S1) and said second system (S2) are supported for rotation relative to each other and that the arrangement serves as optical slip ring for signal transmission between said two systems.

## Revendications

1. Dispositif de transmission de signaux optiques, qui est composé d'un premier système et d'un deuxième système (S1, S2), qui sont des systèmes découplés de façon dynamique, sont, de préférence, mobiles l'un relativement à l'autre, comprenant au moins un moyen émetteur, qui contient une première source lumineuse (9), qui est montée sur ledit premier système (S1), ainsi qu'un moyen récepteur renfermant au moins un guide d'ondes à fibres optiques (1), qui est monté sur ledit deuxième système (S2) à une étendue, le long de laquelle se déplace ladite première source lumineuse (9), et dans lequel on peut coupler la lumière venant de ladite première source lumineuse (9),
**caractérisé en ce qu'**une couche photo réfringente (2) est appliquée au moins sur cette surface dudit guide d'ondes à fibres optiques (1), qui se trouve en opposition directe à ladite première source lumineuse (9), et
**en ce qu'**au moins une source (3) de lumière cohérente est montée sur ledit premier système (S1), dont la lumière imprime, de façon dynamique, une grille optique (7) dans ladite couche photo réfringente (2) par superposition des rayons à l'endroit de couplage de lumière, ladite grille ayant des propriétés de diffraction pour la lumière venant de ladite première source lumineuse (9) de façon, qu'on puisse coupler la lumière de la dernière dans ledit guide d'ondes à fibres optiques (1).

2. Dispositif selon la revendication 1,
**caractérisé en ce que** la lumière (31) de ladite source (9) de lumière cohérente est incidente sur un élément de division des rayons (4), moyennant duquel se forment deux rayons de lumière séparés (32, 33), qui sont induits à se superposer l'un sur l'autre moyennant un système de réflecteurs (5, 6).

3. Dispositif selon la revendication 1,
**caractérisé en ce qu'**au moins deux sources de lumière cohérente sont disposées sur ledit premier système (S1) dont les rayons de lumière sont induits à se superposer l'un sur l'autre directement.

4. Dispositif selon le préambule de la revendication 1,
**caractérisé en ce qu'**une couche photo réfringente (2) est appliquée au moins sur cette surface dudit guide d'ondes à fibres optiques (1), qui se trouve en opposition directe à ladite première source lumineuse (9), et
**en ce qu'**une source lumineuse (3) additionnelle ainsi qu'un masque optique (10) sont disposés sur ledit premier système (S1) d'une façon à imprimer, de façon dynamique, une grille optique (7) dans ladite couche photo réfringente (2) par pénétration dudit masque (10) à un point de l'endroit de couplage de lumière, ladite grille ayant des propriétés de diffraction pour la lumière venant de ladite première source lumineuse (9) d'une manière, qu'on puisse coupler la lumière de la dernière dans ledit guide d'ondes à fibres optiques (1).

5. Dispositif selon une quelconque des revendications 1 à 4,
**caractérisé en ce que** ladite grille optique (7) est formée par irradiation de ladite couche photo réfringente (2) seulement à l'endroit réel de couplage entre ladite première source lumineuse (9) et ledit guide d'ondes à fibres optiques (1), qui est enduit par ladite couche photo réfringente (2).

6. Dispositif selon le préambule de la revendication 1,
**caractérisé en ce qu'**une structure de grille (2) réalisée d'une manière physique est formée au moins dans cette surface dudit guide d'ondes à fibres optiques (1), qui se trouve en opposition directe à la dite première source lumineuse (9),
et **en ce qu'**une couche à transparence optique (2) est appliquée sur ladite structure de grille(12), qui a un indice de réfraction, qui correspond à l'indice de réfraction dudit guide d'ondes à fibres optiques, et dont l'indice de réfraction est variable par l'introduction de l'énergie de l'extérieur.

7. Dispositif selon la revendication 6,
**caractérisé en ce que** ladite structure de grille(12) a des caractéristiques de diffraction pour la lumière venant de ladite première source lumineuse (9), de façon, qu'on puisse coupler la lumière dans ledit guide d'ondes à fibres optiques (1).

8. Dispositif selon la revendication 6 ou 7,
**caractérisé en ce que** ladite couche à transparence optique (2) consiste en un matériau photo réfringente, qui, en état irradié par la lumière, varie son indice de réfraction d'une façon, que la lumière venant de ladite première source lumineuse (9) pénètre ladite couche à transparence optique largement sans pertes et puisse être couplée moyennant la diffraction à travers ladite structure de grille (12) dans ledit guide d'ondes à fibres optiques (1).

9. Dispositif selon la revendication 6 ou 7,
**caractérisé en ce que** ladite couche à transparence optique (2) consiste en un matériau à sensibilité électrique, qui varie son indice de réfraction.

10. Dispositif selon la revendication 9,
**caractérisé en ce que** des électrodes (E1, E2) sont disposées autour dudit guide d'ondes à fibres optiques (1) d'une telle manière, que l'indice de réfraction soit variable en fonction de l'endroit actuel de couplage d'une façon, que la lumière venant de ladite première source lumineuse (9) pénètre ladite couche (2") en matériau à sensibilité électrique, largement sans pertes, et puisse être couplé par diffraction à travers ladite structure de grille(12) dans ledit guide d'ondes à fibres optiques (1).

11. Dispositif selon une quelconque des revendications 6 à 10,
**caractérisé en ce que** ladite couche à transparence optique (12) est formée à une configuration lisse sur le côté supérieur opposé à ladite première source lumineuse (9).

12. Dispositif selon une quelconque des revendications 1 à 11,
**caractérisé en ce que** ledit premier système (S1) et ledit deuxième système (S2) sont logés pour rotation l'un relativement à l'autre, et **en ce que** le système sert en tant qu'un anneau collecteur optique pour la transmission de signaux entre lesdits deux systèmes.
